# FASCICULE DE BREVET EUROPEEN

(11) **EP 1 977 497 B1**
(45) Date de publication et mention de la délivrance du brevet: **26.10.2011**
(21) Numéro de dépôt: 07717830.9
(22) Date de dépôt: 05.01.2007
(51) Int. Cl.: H02K 3/12

(54) **PROCEDE POUR REALISER LE BOBINAGE D'UN STATOR DE MACHINE ELECTRIQUE TOURNANTE, ET STATOR OBTENU PAR CE PROCEDE**
VERFAHREN ZUR HERSTELLUNG DER SPULE EINES STATORS EINER ELEKTRISCHEN ROTATIONSMASCHINE UND AUF DIESE WEISE HERGESTELLTER STATOR
METHOD FOR PRODUCING THE COIL OF A ROTARY ELECTRIC MACHINE STATOR AND STATOR THUS OBTAINED

(30) Priorité: 16.01.2006 FR 0650140
(43) Date de publication de la demande: 08.10.2008
(73) Titulaire: VALEO EQUIPEMENTS ELECTRIQUES MOTEUR, 94046 Créteil (FR)
(72) Inventeur: BODIN, Denis, F-62280 Saint Martin Boulogne (FR); CHOCHOY, Jean-Pierre, F-62240 Cremarest (FR); DEFEBVIN, Alain, F-62630 Cormont (FR); JAZE, Michel, F-62630 Frencq (FR); EVEN, Denis, F-75012 Paris (FR)
(74) Mandataire: de Lambilly Delorme, Marie Pierre
(86) Numéro de dépôt international: PCT/FR2007/050613
(87) Numéro de publication internationale: WO 2007/080339

(56) Documents cités:
- JP-A- 11 289 723
- JP-A- 2004 166 316
- JP-A- 2005 348 496
- US-A1- 2005 110 357
- US-A1- 2005 133 655

## Description

L'invention propose un stator de machine électrique tournante comportant un bobinage formé d'une pluralité de fils conducteurs qui sont répartis dans les encoches du corps de manière optimisée.

L'invention propose plus particulièrement un stator de machine électrique tournante qui comporte un corps annulaire d'axe principal globalement vertical qui est délimité axialement par une face supérieure et par une face inférieure, et qui est délimité radialement par une face annulaire interne, un ensemble d'encoches axiales réalisées dans la face annulaire interne du corps et qui sont débouchantes dans la face supérieure et dans la face inférieure du corps, et un bobinage comportant une pluralité d'enroulements, du type dans lequel chaque enroulement est constitué d'au moins un conducteur qui est agencé dans des encoches du corps associées à l'enroulement, en formant des ondulations axiales et en formant globalement une spirale coaxiale à l'axe A du corps qui est constituée d'un ensemble de spires superposées radialement. Un tel corps annulaire de machine électrique tournante est décrit par example dans US-A-2005/110357.

Selon un mode de réalisation connu, chaque enrouement comporte un ou plusieurs conducteurs en spirale dont chaque spire forme des ondulations parcourant les encoches du corps.

Pour améliorer les performances de la machine électrique, il est préférable de remplir au maximum les encoches du corps tout en optimisant les sections de passage du flux magnétique.

Pour cela, pour des stators composant des alternateurs notamment destinés aux applications automobiles, il a été proposé de réaliser le stator de manière à permettre le montage dans chaque encoche de deux brins de conducteurs à une même cote radiale par rapport à l'axe principal du stator.

Une telle solution permet d'augmenter le coefficient de remplissage de chaque encoche, et elle augmente aussi le nombre de brins de chaque enroulement.

Cette augmentation du nombre de brins des enroulements pose certains problèmes au niveau des chignons du bobinage car la disposition des brins de chaque fil conducteur, formant' les chignons, n'est pas optimisée. Il en résulte que l'épaisseur radiale de chaque chignon d'un bobinage formé de fils conducteurs de section réduite, selon une telle solution, est plus importante que l'épaisseur d'un chignon d'un bobinage comportant un nombre réduit de fils conducteurs de section plus élevée.

L'invention a pour but de proposer un stator de machine électrique tournante dans lequel les fils conducteurs sont répartis de manière à optimiser le volume global du bobinage et de ses extrémités axiales, ou chignons.

Dans ce but, l'invention propose un stator du type décrit précédemment, caractérisé en ce que chaque conducteur comporte une paire de fils conducteurs électriquement qui sont adjacents et qui sont agencés à la même cote radiale l'un par rapport à l'autre, à chaque point du conducteur.

On entend ici par cote radiale, la distance entre l'axe du stator et le brin de conducteur mesurée sur le rayon reliant ledit axe audit brin. Ainsi deux brins ont une même cote radiale signifie que la distance entre l'axe du stator et chaque brin est identique, et en précisant que les deux brins ont la même cote radiale l'un par rapport à l'autre à chaque point du conducteur signifie que sur toute sa longueur chaque brin est à la même distance de l'axe du stator.

Selon d'autres caractéristiques de l'invention :
- pour chaque spire, les deux fils forment des ondulations axiales complémentaires qui sont imbriquées axialement, de manière que l'un des deux fils soit situé axialement dessus l'autre ;
- chaque fil du conducteur comporte consécutivement, d'amont en aval :
   ■ un brin inférieur qui est agencé globalement au dessous de la face inférieure du corps,
   ■ un brin axial amont qui est agencé dans une première encoche associée à l'enroulement,
   ■ un brin supérieur qui est agencé globalement au dessus de la face supérieure du corps, et
   ■ un brin axial aval qui est agencé dans une deuxième encoche associée à l'enroulement, la dite deuxième encoche étant située en aval par rapport à dite la première encoche ;
- dans au moins une spire du bobinage, le brin inférieur d'un premier fil est agencé axialement au-dessus d'un brin inférieur d'un deuxième fil, le premier brin axial du premier fil est situé en amont du premier brin axial du deuxième fil, le brin supérieur du premier fil est agencé axialement dessus le brin supérieur du deuxième fil et le deuxième brin axial du premier fil est situé en aval du deuxième brin axial du deuxième fil ;
- dans au moins une autre spire du bobinage, le brin inférieur du premier fil est agencé axialement au-dessous d'un brin inférieur du deuxième fil, le premier brin axial du premier fil est situé en amont du premier brin axial du deuxième fil, le brin supérieur du premier fil est agencé axialement dessous le brin supérieur du deuxième fil et le deuxième brin axial du premier fil est situé en aval du deuxième brin axial du deuxième fil ;
- tous les brins axiaux de chaque fil, qui sont agencés dans une même encoche, sont situés à la même cote angulaire autour de l'axe A du stator.

L'invention propose aussi un procédé pour réduire le temps de réalisation d'un tel stator comportant un nombre élevé de fils conducteurs.

Dans ce but, l'invention propose aussi un procédé de bobinage d'un stator selon l'une quelconque des revendications précédentes, qui comporte successivement, pour chaque enroulement :
- une étape de bobinage du conducteur sur un support linéaire en forme de rail longitudinal comportant des encoches transversales ;
- une première étape de transfert du conducteur depuis le support linéaire dans un support annulaire ; et
- une deuxième étape de transfert du conducteur depuis le support annulaire dans le corps,
   du type dans lequel l'étape de bobinage consiste à mettre en place le conducteur dans des encoches associées à l'enroulement de manière que chaque fil comporte un brin axial qui est reçu dans chaque encoche transversale associée, et de manière que chaque fil comporte des brins longitudinaux qui sont agencés transversalement de part et d'autre du support linéaire,
   caractérisé en ce que lors de l'étape de bobinage, les deux fils du conducteur sont mis en place simultanément sur le support linéaire et les encoches associées reçoivent successivement les deux fils de manière que dans chaque encoche, les deux fils sont superposés verticalement l'un sur l'autre, et de manière que dans une première encoche, le brin axial du premier fil est agencé dessus le brin axial du deuxième fil, et dans une deuxième encoche qui est consécutive à la première encoche, le brin axial du premier fil est agencé dessous le brin axial du deuxième fil.

Selon d'autres caractéristiques du procédé selon l'invention :
- lors de l'étape de bobinage, les deux fils du conducteur sont mis en place sur le support linéaire de manière que la longueur des brins longitudinaux du premier fil, qui sont agencé à droite du support linéaire est inférieure à la longueur des brins longitudinaux du deuxième fil qui sont agencés à droite du support linéaire.
- lors de l'étape de bobinage, les deux fils du conducteur sont mis en place sur le support linéaire de manière que la longueur des brins longitudinaux du premier fil, qui sont agencé à gauche du support linéaire est supérieure à la longueur des brins longitudinaux du deuxième fil qui sont agencés à gauche du support linéaire.

- lors de l'étape de bobinage, les deux fils du conducteur sont mis en place sur le support linéaire de manière que chaque brin longitudinal du premier fil, qui est agencé à droite du support linéaire est agencé transversalement entre le support linéaire et le brin longitudinal associé du deuxième fil.
- lors de l'étape de bobinage, les deux fils du conducteur sont mis en place sur le support linéaire de manière que chaque brin longitudinal du deuxième fil, qui est agencé à gauche du support linéaire est agencé transversalement entre le support linéaire et le brin longitudinal associé du premier fil.
- la première étape de transfert consiste à transférer successivement les brins qui sont agencés dans chaque encoche du support linéaire, vers une encoche radiale associée du support annulaire de manière que dans chaque encoche radiale les brins soient superposés radialement.
- la deuxième étape de transfert consiste à transférer simultanément les brins agencés dans chaque encoche radiale du support annulaire dans une encoche en vis-à-vis du corps.
- lors de la deuxième étape de transfert, tous les brins qui sont agencés à la même cote radiale dans les encoches radiales du support annulaire se décalent angulairement dans l'encoche associée vers l'amont ou vers l'aval.

D'autres caractéristiques et avantages de l'invention apparaîtront à la lecture de la description détaillée qui suit pour la compréhension de laquelle on se reportera aux figures annexées parmi lesquelles :
- la figure 1 est une vue partielle en perspective de l'intérieur d'un stator dans lequel les fils conducteurs sont déposés conformément à l'invention ;
- la figure 2 est une vue en bout du corps de stator représenté à la figure 1 ;
- la figure 3 est un développement linéaire de deux fils conducteurs formant un enroulement, montrant la position axiale des deux fils l'un par rapport à l'autre ;
- la figure 4 est une vue en perspective de deux fils conducteurs d'un même enroulement, montrant les positions relatives des brins des deux fils, dans deux spires adjacentes de l'enroulement ;
- la figure 5 est une vue similaire à celle de la figure 4, montrant un autre agencement des brins des deux fils dans les spires ;
- la figure 6 est une représentation schématique en perspective d'une installation pour la mise en oeuvre de la première étape de dépose des fils sur le support linéaire ;
- la figure 7 est une représentation schématique des deux couches de conducteurs obtenues à l'issue de la première étape de dépose, permettant d'obtenir chacune un même nombre de spires ;
- la figure 8 est une vue en détail de l'agencement de deux fils formant un même conducteur sur le support linéaire, montrant la position relative des tronçons des deux fils les uns par rapport aux autres ;
- la figure 9 est une représentation schématique en perspective des deux fils représentés à la figure 8 ;
- la figure 10 est une représentation schématique d'une installation pour la mise en oeuvre de la première étape de transfert ;
- la figure 11 est une vue en perspective et à plus grande échelle de l'installation représentée à la figure 10 ;
- la figure 12 est une représentation schématique du support annulaire représenté aux figures 10 et 11 ;
- la figure 13 est un détail à plus grande échelle de l'installation représentée la figure 10, montrant le transfert des fils conducteurs par l'intermédiaire des guides latéraux ;
- la figure 14 est une représentation schématique en perspective de deux fils conducteurs qui ont été transférés sur le support annulaire à l'issue de la première étape de transfert, montrant la position relative des tronçons des deux fils les uns par rapport aux autres ;
- la figure 15 est une représentation schématique en perspective de l'installation de mise en oeuvre de la deuxième étape de transfert, dans laquelle les lames d'extraction sont représentées en position initiale ;
- la figure 16 est une vue similaire à celle de la figure 15, dans laquelle les lames d'extraction sont représentées en position finale pour laquelle le bobinage a été transféré sur le corps.

Pour la description de l'invention, on adoptera à titre non limitatif les orientations selon les repères indiqués aux figures.

Dans la description qui va suivre, des éléments identiques, similaires ou analogues seront désignés par les mêmes chiffres de référence.

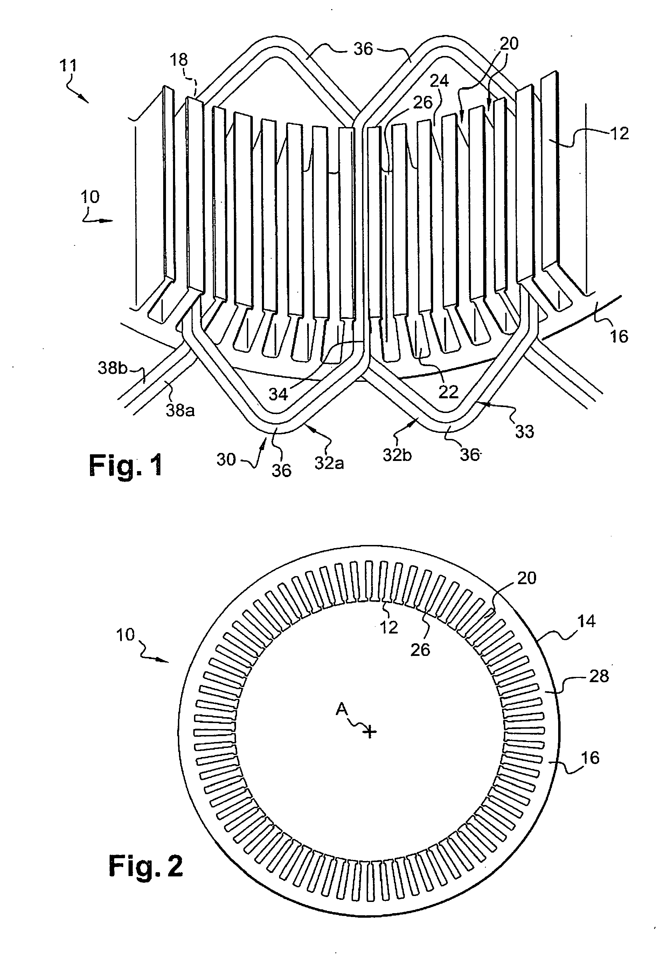

On a représenté à la figure 1 une vue partielle d'un stator 11 de machine électrique tournante qui comporte principalement un corps 10 dans lequel sont montés plusieurs enroulements de phase 30, dont un seul enroulement de phase 30 a été représenté ici. De plus, ici, le corps 10 est réalisé de manière qu'il est apte à recevoir six enroulements de phase 30 analogues.

La machine tournante est par exemple un alternateur ou un alterno-démarreur. Cette machine est de préférence destinée à être mise en oeuvre dans un véhicule automobile.

On rappelle qu'un alterno-démarreur est une machine électrique tournante apte à travailler de manière réversible, d'une part, comme générateur électrique en fonction alternateur, et d'autre part comme moteur électrique, notamment pour démarrer le moteur thermique du véhicule automobile.

On a représenté à la figure 2 le corps de stator 10 du stator 11 représenté à la figure 1. Le corps de stator 10 a une forme cylindrique annulaire d'axe "A" et il consiste en un empilement axial de tôles planes. Le corps de stator 10 est ainsi communément appelé "corps".

Le corps de stator 10 est délimité radialement par une face cylindrique interne 12 et par une face cylindrique externe 14, et il est délimité axialement par une face radiale d'extrémité axiale inférieure 16 et par une face radiale d'extrémité axiale supérieure 18 (figure 1).

Le corps 10 comporte des encoches axiales 20 qui débouchent axialement dans les faces radiales d'extrémité axiales inférieure 16 et supérieure 18 du corps 10 par l'intermédiaire d'orifices axiaux avant 22 et arrière 24.

Les encoches 20 sont ouvertes radialement dans la face cylindrique interne 12 du corps 10 par l'intermédiaire d'une rainure axiale 26 qui s'étend depuis la face radiale inférieure 16 jusqu'à la face radiale supérieure 18. La largeur transversale de chaque rainure axiale 26 est inférieure à la largeur de l'encoche 20 associée.

Les encoches 20 sont toutes identiques et elles sont par exemple au nombre de soixante-douze. Elles sont réparties angulairement de manière régulière autour de l'axe "A" du corps 10.

La portion annulaire externe pleine du corps 10 dans laquelle les encoches 20 ne s'étendent pas, est appelée culasse 28.

Pour former le stator 11, plusieurs enroulements de phase 30 sont montés dans le corps 10.

L'invention sera décrite en référence à un stator 11 comportant six enroulements de phase 30, aussi appelé stator "hexaphasé".

L'invention est cependant applicable à des stators comportant un nombre différent d'enroulements de phase, et notamment à des stators "triphasés" comportant trois enroulements de phase 30. Le corps de stator 10 comporte alors par exemple trente-six ou quarante-huit encoches 20.

Chaque enroulement de phase 30 comporte des spires ondulées 32 formées par un conducteur 33 d'électricité, qui sont empilées radialement.

On a représenté à la figure 1 seulement deux spires 32 d'un enroulement de phase 30, il sera compris que l'enroulement 30 peut comporter un plus grand nombre de spires 32.

Chaque conducteur 33 comporte une série de tronçons axiaux 34 qui sont reçus dans une série d'encoches associées 20.

Chaque conducteur 33 comporte aussi des tronçons de liaison 36 d'orientation globalement transversale, qui relient les tronçons axiaux consécutifs 34 de l'enroulement 30, et qui s'étendent alternativement en saillie par rapport à la face d'extrémité axiale supérieure 18 et en saillie par rapport à la face d'extrémité axiale inférieure 16.

Les encoches 20 d'une série d'encoches reçoivent les tronçons axiaux 34 des conducteurs 33 constituant un enroulement de phase 30.

Chaque série d'encoches 20 est associée à un des six enroulements de phase 30. Deux encoches consécutives 20 d'une série d'encoches 20 sont séparées par des encoches adjacentes 20 correspondant chacune à une autre série d'encoches 20 associée à l'un des cinq autres enroulements de phase 30.

Ainsi, pour un stator hexaphasé comme c'est le cas à la figure 1, cinq encoches 20 adjacentes sont laissées libres entre deux encoches 20 de chaque série. En d'autres termes les fils 33 d'un enroulement sont insérés dans une encoche 20 sur six encoches adjacentes 20.

Ainsi pour un stator comportant N enroulements de phases 30, les tronçons axiaux 34 d'une spire 32 sont reçus dans une encoche 20 sur N encoches adjacentes 20.

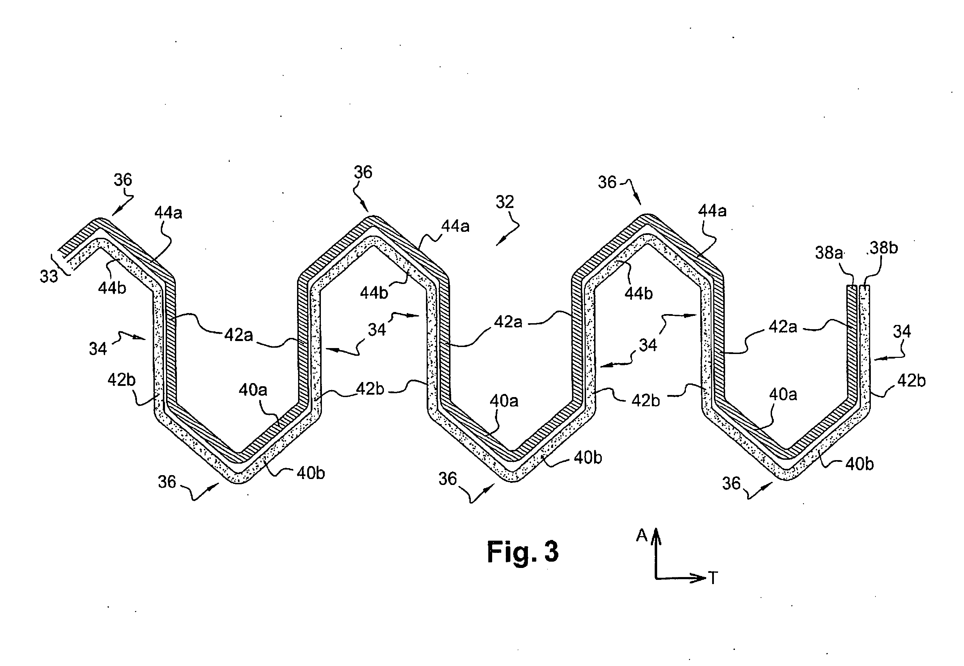

On a représenté à la figure 3 le développement linéaire d'une spire 32 d'un enroulement 30 formée à partir d'un seul conducteur 33.

Conformément à l'invention, chaque conducteur 33 comporte une paire de fils 38a, 38b conducteurs électriquement qui sont montés sur le corps 10 de manière que les deux fils 38a, 38b sont adjacents l'un à l'autre.

De plus, les deux fils 38a, 38b sont globalement situés à la même cote radiale par rapport à l'axe A du corps 10 en chaque point du conducteur 33, c'est-à-dire à chaque cote prise le long du conducteur 33.

Comme on l'a dit plus haut, chaque spire 32 de conducteurs 33 est ondulée, c'est-à-dire elle est de forme globalement sinusoïdale.

Ainsi, chaque fil 38a, 38b est lui aussi de forme globalement sinusoïdale et comporte consécutivement un brin transversal inférieur 40a, 40b qui s'étend au dessous de la face inférieure 16 du corps 10, un brin axial 42a, 42b qui est reçu dans une encoche 20 associée, un brin transversal supérieur 44a, 44b, qui s'étend au dessus de la face supérieure 18 du corps 10.

Selon un autre aspect de l'invention, le conducteur 33 est monté sur le corps 10 de manière que les deux fils conducteurs 38a, 38b sont superposés axialement et ils sont imbriqués axialement.

Ainsi, dans chaque spire 32, les fils 38a, 38b d'un même conducteur 33 ne se croisent pas ni ne se chevauchent radialement, ce qui limite l'épaisseur radiale de chaque tronçon de liaison 36 du conducteur 33, globalement à la valeur du diamètre de chaque fil 38a, 38b.

Par conséquent, chaque chignon du bobinage, qui est formé par l'ensemble des tronçons de liaison 36 des conducteurs 33 qui sont agencé au niveau d'une extrémité axiale du corps 10 de stator 11, est d'épaisseur générale limitée.

Comme on peut le voir à la figure 3, un premier fil 38a est agencé axialement au dessus du deuxième fil 38b.

Par conséquent, le brin inférieur 40a du premier fil 38a est agencé axialement au dessus du brin inférieur 40b du deuxième fil 38b, et le brin supérieur 44a du premier fil 38a est agencé axialement au dessus du brin supérieur 44b du deuxième fil 38b.

De plus, les brins axiaux 42a, 42b sont répartis dans les encoches de manière que deux brins axiaux 42a du premier fil 38a qui sont reçus dans deux encoches 20 associées consécutives et qui sont reliés entre eux par le brin supérieur 44a du premier fil 38a, sont agencés de part et d'autre des brins axiaux 42b du deuxième fil 38b qui sont reçus dans les deux mêmes encoches 20 associées consécutives et qui sont reliés entre eux par le brin supérieur 44b du deuxième fil 38b.

Aussi, deux brins axiaux 42a du premier fil 38a qui sont reçus dans deux encoches 20 associées consécutives et qui sont reliés entre eux par le brin inférieur 40a du premier fil 38a, sont agencés entre les brins axiaux 42b du deuxième fil 38b qui sont reçus dans les deux mêmes encoches 20 associées consécutives et qui sont reliés entre eux par le brin inférieur 40b du deuxième fil 38b.

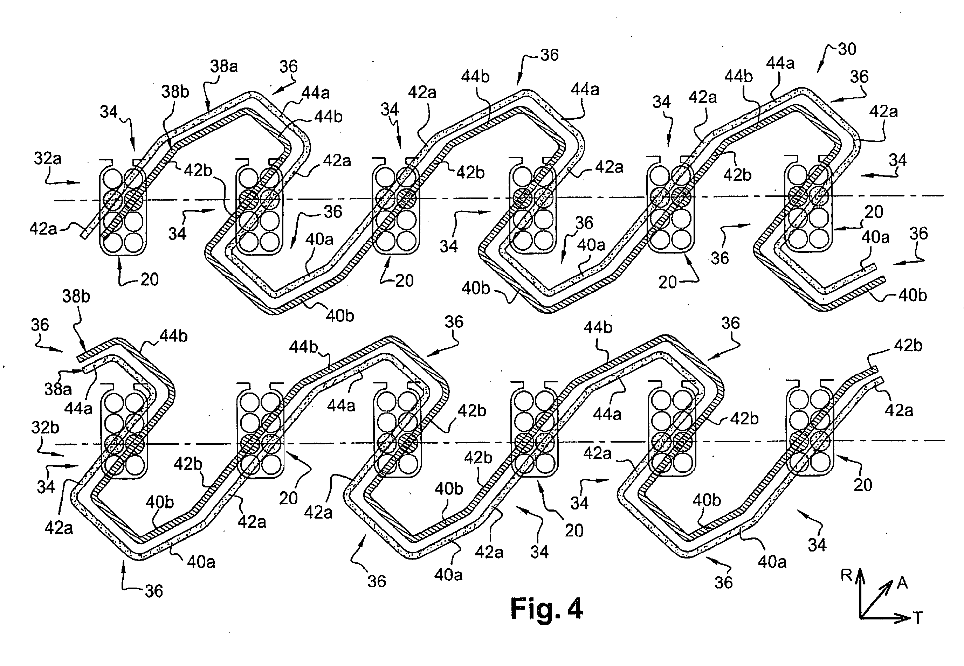

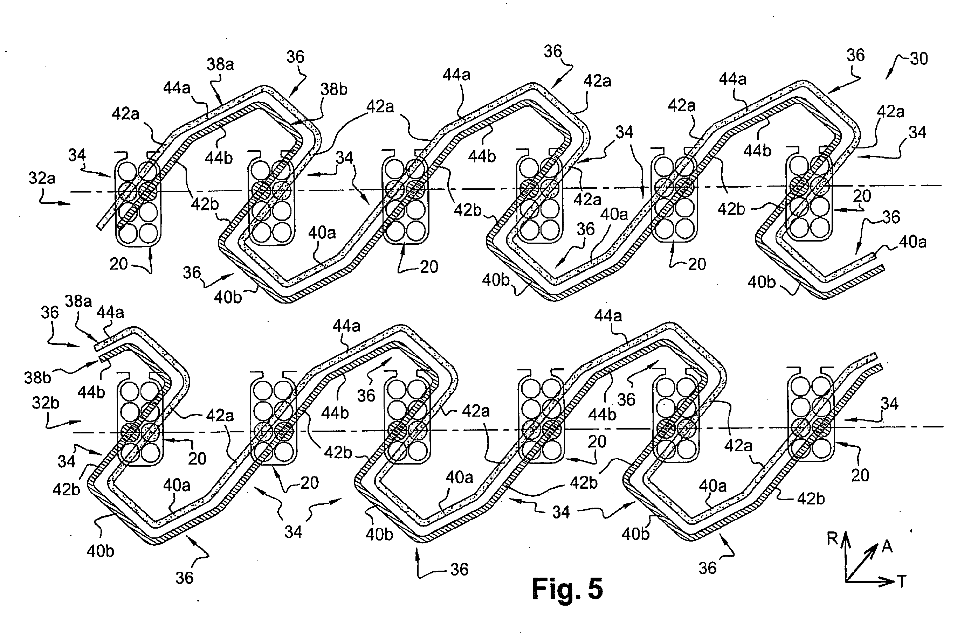

Selon un mode de réalisation préféré du bobinage et comme on l'a représenté aux figures 4 et 5, chaque enroulement 30 est réalisé selon le type "ondulé réparti", c'est-à-dire que pour deux encoches 20 adjacentes associées à un enroulement de phase 30, le conducteur 33 formant au moins une première spire 32a de l'enroulement de phase 30 comporte un tronçon de liaison 36 qui relie les tronçons axiaux 34 reçus dans les deux encoches adjacentes 20 mentionnées précédemment, et qui est agencé axialement au dessus de la face supérieure 18 du corps 10, et le conducteur 33 formant au moins une deuxième spire 32b de l'enroulement de phase 30 comporte un tronçon de liaison 36 qui relie les tronçons axiaux 34 reçus dans les deux encoches adjacentes 20 mentionnées précédemment, et qui est agencé axialement au dessous de la face inférieure 16 du corps 10.

Selon un premier aspect de l'invention représenté à la figure 4, dans la première spire 32a, le premier fil 38a est agencé axialement au dessus du deuxième fil 38b, tel que décrit précédemment, et dans la deuxième spire 32b, le premier fil 38a est agencé axialement au dessous du deuxième fil 38b.

Par conséquent, dans la première spire 32, deux brins axiaux 42a du premier fil 38a qui sont reçus dans deux encoches 20 associées consécutives et qui sont reliés à un brin supérieur 44a du premier fil 38a, sont agencés de part et d'autre des brins axiaux 42b du deuxième fil 38b qui sont reçus dans les deux mêmes encoches 20 associées consécutives et qui sont reliés au brin supérieur 44b du deuxième fil 38b.

Aussi, deux brins axiaux 42a du premier fil 38a qui sont reçus dans deux encoches 20 associées consécutives et qui sont reliés au brin inférieur 40a du premier fil 38a, sont agencés entre les brins axiaux 42b du deuxième fil 38b qui sont reçus dans les deux mêmes encoches 20 associées consécutives et qui sont reliés au brin inférieur 40b du deuxième fil 38b.

Dans la deuxième spire 32b, deux brins axiaux 42b du deuxième fil 38b qui sont reçus dans deux encoches 20 associées consécutives et qui sont reliés à un brin supérieur 44b du deuxième fil 38b, sont agencés de part et d'autre des brins axiaux 42a du premier fil 38a qui sont reçus dans les deux mêmes encoches 20 associées consécutives et qui sont reliés au brin supérieur 44a du premier fil 38a.

Aussi, deux brins axiaux 42b du deuxième fil 38b qui sont reçus dans deux encoches 20 associées consécutives et qui sont reliés au brin inférieur 40b du deuxième fil 38b, sont agencés entre les brins axiaux 42a du premier fil 38a qui sont reçus dans les deux mêmes encoches 20 associées consécutives et qui sont reliés au brin inférieur 40a du premier fil 38a.

Il en résulte que dans chaque encoche, tous les brins axiaux 42a, 42b d'un même fil 38a, 38b sont alignés radialement. C'est-à-dire que les brins axiaux 42a du premier fil 38a qui sont reçus dans une encoche 20 sont tous agencés en amont des brins axiaux 42b du deuxième fil 38b qui sont reçus dans cette même encoche ou sont tous agencés en aval des brins axiaux 42b du deuxième fil 38b qui sont reçus dans cette même encoche.

Selon un deuxième aspect de l'invention, et comme on peut le voir à la figure 5, le premier fil 38a est agencé axialement au dessus du deuxième fil 38b, dans la première spire 32a et dans la deuxième spire 32b.

Ainsi, dans chaque spire, deux brins axiaux 42a du premier fil 38a qui sont reçus dans deux encoches 20 associées consécutives et qui sont reliés à un brin supérieur 44a du premier fil 38a, sont agencés de part et d'autre des brins axiaux 42b du deuxième fil 38b qui sont reçus dans les deux mêmes encoches 20 associées consécutives et qui sont reliés au brin supérieur 44b du deuxième fil 38b.

Aussi, deux brins axiaux 42a du premier fil 38a qui sont reçus dans deux encoches 20 associées consécutives et qui sont reliés au brin inférieur 40a du premier fil 38a, sont agencés entre les brins axiaux 42b du deuxième fil 38b qui sont reçus dans les deux mêmes encoches 20 associées consécutives et qui sont reliés au brin inférieur 40b du deuxième fil 38b.

Il en résulte que dans chaque encoche 20, les brins axiaux 42a du premier fil 38a sont agencés alternativement en amont et en aval des brins axiaux 42b du deuxième fil 38b.

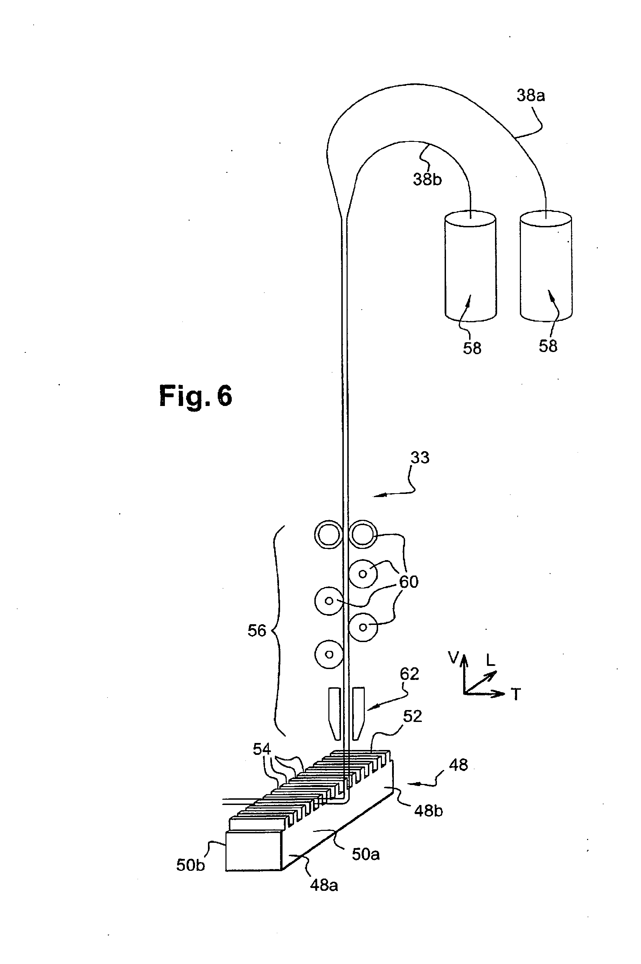

On a représenté aux figures 6 et suivantes des installations pour la mise en oeuvre d'un procédé de réalisation du stator 11 selon l'invention, ainsi que les produits intermédiaires obtenus à l'issue de certaines étapes du procédé de réalisation selon l'invention.

Le procédé de réalisation du stator 11 comporte successivement une étape de dépose des conducteurs 33 sur un support linéaire pour former un développement linéaire des spires 32, une première étape de transfert des fils 38a, 38b depuis le support linéaire vers un support annulaire pour former les spires 32, et une deuxième étape de transfert des fils 38a, 38b depuis le support annulaire vers le corps 10 de stator 11.

On a représenté à la figure 6 une installation pour la mise en oeuvre de l'étape de dépose des conducteurs 33 sur un support linéaire 48.

Dans la description de l'installation qui va suivre, on adoptera à titre non limitatif les orientations verticale, longitudinale et transversale selon le repère V, L, T indiqué à la figure 6.

Le support linéaire 48 consiste en un élément globalement parallélépipédique d'orientation principale longitudinale, et il est notamment délimité par deux faces latérales 50a, 50b longitudinales verticales et une face supérieure 52 horizontale.

La face supérieure 52 du support linéaire 48 comporte des encoches transversales 54 qui débouchent transversalement dans les faces latérales 50a, 50b du support linéaire 48 et qui sont réparties longitudinalement selon un pas constant le long du support linéaire 48.

L'installation comporte une tête de dépose 56 associée à chaque conducteur 33 et qui permet de déposer les fils 38a, 38b du conducteur 33 associé sur le support linéaire 48. Ici, par souci de clarté, on a représenté à la figure 6 une seule tête de dépose 56, en association avec un seul conducteur 33, cependant, les têtes de dépose 56 étant identiques, il sera compris que la description qui va suivre d'une tête 56 s'applique par similitude aux autres têtes de dépose 56.

La tête de dépose 56 comporte un ensemble de galets 60 qui permettent de réaliser l'entraînement des fils 38a, 38b provenant du conteneur 58.

La tête de dépose 56 comporte aussi une buse guide fil 62 au travers de laquelle les fils 38a, 38b du conducteur 33 sortent de la tête de dépose 56, et cette buse 62 qui est conformée pour déposer les fils 38a, 38b du conducteur 33 sur le support linéaire 48 en formant les brins axiaux 34 et les brins de liaison 36.

Conformément à l'invention, et comme on l'a dit plus haut, chaque conducteur 33 est constitué de deux fils conducteurs 38a, 38b.

Par conséquent, la tête 56 de dépose de chaque conducteur 33 est alimentée simultanément par les deux fils 38a, 38b qui proviennent chacun d'un conteneur 58 tel qu'une bobine de fil par exemple.

L'étape de dépose des conducteurs 33 comporte une première phase de dépose au cours de laquelle chaque tête de dépose 56 dépose les fils 38a, 38b de chaque conducteur 33 sur le support linéaire 48 de manière à former une première couche 64 de conducteurs 33, et une deuxième phase de dépose qui est postérieure à la première phase de dépose et au cours de laquelle chaque tête de dépose 56 dépose les fils 38a, 38b de chaque conducteur 33 sur le support linéaire 48 pour former une deuxième couche 66 de conducteurs 33 qui est superposée verticalement sur la première couche 64 de conducteurs 33.

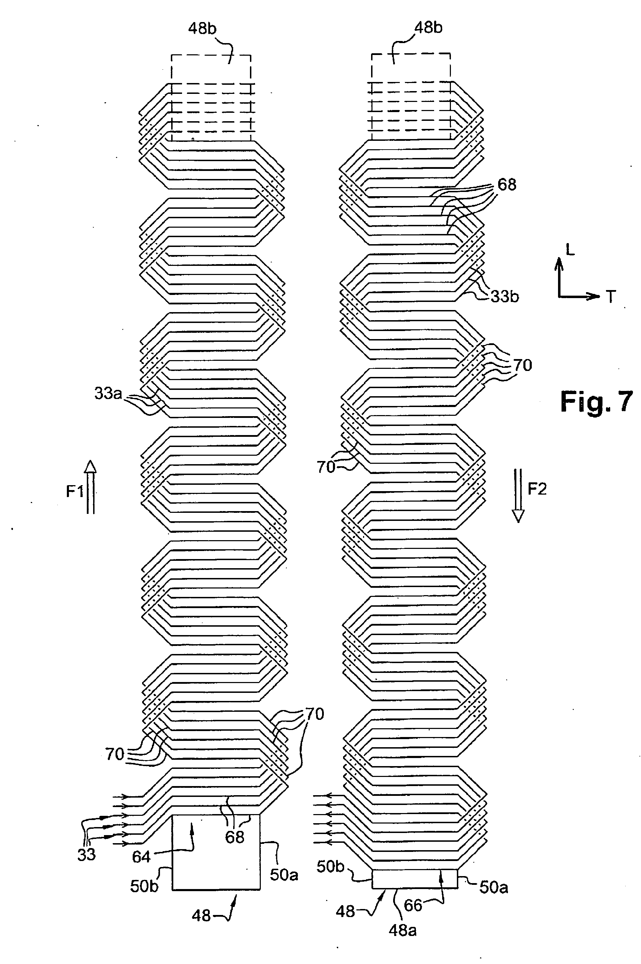

On a représenté à la figure 7, les deux couches 64, 66 de conducteurs 33 qui sont obtenues à l'issue à l'étape de dépose des conducteurs 33.

Par souci de clarté des figures, les deux couches 64, 66 sont représentées décalées transversalement l'une par rapport à l'autre.

Au cours de chaque phase de dépose, les têtes de dépose 56 se déplacent par rapport au support linéaire 48 selon une trajectoire globalement sinusoïdale, de manière à déposer chaque conducteur 33 dans des encoches 54 du support linéaire 48 qui sont associées au conducteur 33.

Ainsi, au cours des deux phases de dépose, les têtes de dépose 56 remplissent successivement les encoches 54 du support linéaire 48 en formant des tronçons transversaux 68 qui sont introduits dans les encoches 54, et des tronçons longitudinaux latéraux 70 qui sont agencés transversalement de part et d'autre du support linéaire 48, en vis-à-vis de chacune des faces latérales 50a, 50b.

Aussi, dans chacune des deux couches 64, 66, chaque conducteur 33 forme des ondulations, ou vagues longitudinales, comportant successivement un tronçon transversal 68 qui est reçu dans une encoche 54 associée, un tronçon longitudinal 70 qui s'étend transversalement en vis-à-vis de la face latérale droite 50a du support linéaire 48, un tronçon transversal 68 consécutif qui est reçu dans une encoche 54 associée consécutive, un tronçon longitudinal 70 qui s'étend en vis-à-vis de la face latérale gauche 50b du support linéaire 48.

Chaque tronçon longitudinal 70 qui s'étend en vis-à-vis de la face latérale droite 50a du support linéaire 48 relie les extrémités libres de droite de deux tronçons transversaux 68 consécutifs. De la même manière, chaque tronçon longitudinal 70 qui s'étend en vis-à-vis de la face latérale gauche 40b du support linéaire 38 relie les extrémités de gauche de deux tronçons transversaux 68 consécutifs.

De plus, les tronçons longitudinaux 70 sont agencés alternativement de part et d'autre du support linéaire 48, c'est-à-dire qu'ils sont décalés longitudinalement d'un pas équivalent à la distance entre deux tronçons transversaux 68 consécutifs.

D'une manière similaire à celles du corps 10 du stator 11, les encoches 54 du support linéaire 48 sont associées à un conducteur 33 d'un enroulement de phase 30 par ensembles d'encoches 54.

Ainsi, deux encoches 54 consécutives d'un même ensemble d'encoches 54 sont séparées par des encoches 54 dont chacune appartient à l'un des autres ensembles d'encoches 54.

De plus, les encoches 54 de chaque ensemble d'encoche 54 sont réparties sur le support linéaire 48 à un pas constant égal au nombre d'enroulement des phase 30, c'est-à-dire ici avec un pas de six encoches.

Le nombre d'encoches 54 du support linéaire 48 est déterminé en fonction du nombre de spires 32 de chaque enroulement de phases 30, et en fonction du nombre d'encoches du corps 10, de manière que chaque portion de chaque conducteur 33 qui forme l'une des deux couches de conducteur 64, 66 permette de former un nombre entier de spires 32 de l'enroulement de phase 30 associé.

Ici, le nombre d'encoches 54 du support linéaire 48 est déterminé de manière que la portion de chaque conducteur 33 formant l'une des deux couches de conducteur 64, 66 permettent de former un nombre maximum de quatre spires 32.

De plus, comme on l'a dit précédemment, le corps 10 comporte soixante-douze encoches.

Par conséquent, le support linéaire 48 comporte deux cent quatre-vingt huit encoches 54.

Conformément à un autre aspect de l'invention, l'étape de dépose des conducteurs 33 consiste à déposer simultanément les deux fils 38a, 38b de chaque conducteur 33 dans les encoches 54 associées du support linéaire 48, au cours de chacune des deux phases de dépose.

Lors de chacune des deux phases de dépose des conducteurs 33, le déplacement des têtes de dépose 56 par rapport au support linéaire 48 est déterminé de manière que les deux fils 38a, 38b de chaque conducteur 33 sont décalés transversalement l'un par rapport à l'autre dans chaque couche 64, 66 du conducteur 33.

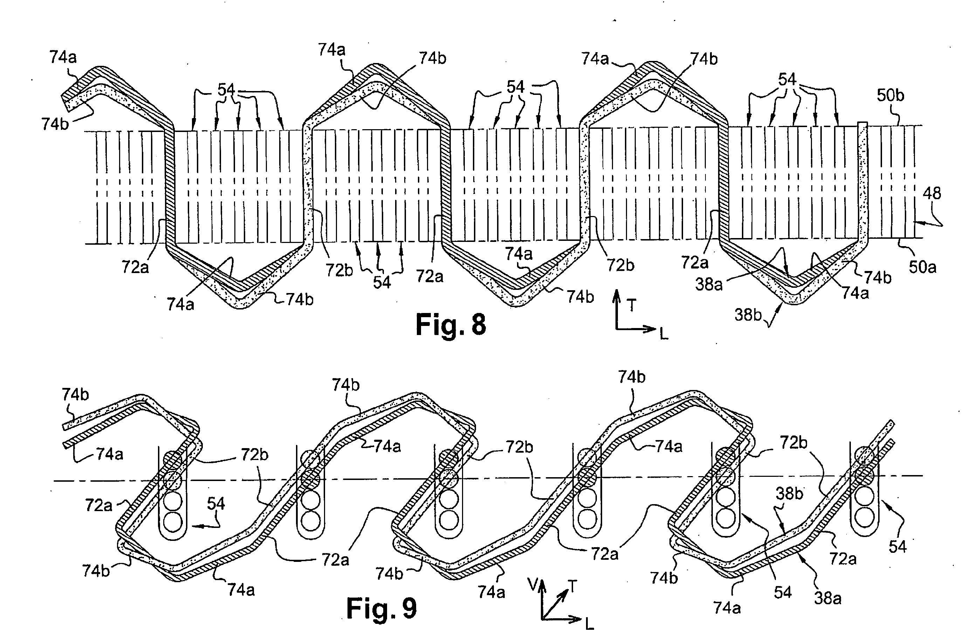

Ainsi, comme on peut le voir aux figures 8 et 9, le premier fil 38a du conducteur 33 est agencé transversalement à gauche du deuxième fil 38b du même conducteur.

Selon un autre aspect du support linéaire 48, et comme on peut le voir plus en détails à la figure 9, la largeur de chaque encoche 54, mesurée selon la direction longitudinale, est globalement égale à l'épaisseur de chacun des deux fils 38a et 38b.

Par conséquent, dans chaque encoche 54 du support linéaire 48, les brins 72a, 72b de chaque fil 38a, 38b qui sont reçus dans cette encoche sont superposés verticalement l'un sur l'autre.

Selon encorne un autre aspect de l'invention, les brins 72a, 72b des fils 38a, 38b sont agencés alternativement l'un dessus l'autre dans les encoches 54 associées du support linéaire 48, c'est-à-dire que dans une première encoche 54 associée, le brin 72a du premier fil 38a, qui est reçu dans cette encoche 54, est agencé verticalement au-dessus du brin 72b du deuxième fil 38b qui est reçu dans cette même encoche 54.

De plus, dans une deuxième encoche 54 associée, qui est consécutive à la première encoche 54 associée, le brin 72a du premier fil 38a, qui est reçu dans cette deuxième encoche associée 54, et agencé verticalement au-dessous du brin 72b du deuxième fil 38b qui est reçu dans cette deuxième encoche associée 54.

Ainsi, lorsque l'on regarde latéralement chaque couche 64, 66 du conducteur 33, les brins longitudinaux 74a, 74b qui relient les brins transversaux 72a, 72b qui sont reçus dans deux encoches 54 adjacentes, se croisent.

Cependant, comme on l'a dit plus haut, les deux fils 38a, 38b sont décalés transversalement l'un par rapport à l'autre dans chaque couche 64, 66.

Par conséquent, les deux brins longitudinaux 74a, 74b ne se superposent pas verticalement.

Du fait que les deux fils 38a, 38b de chaque conducteur 33 sont décalés transversalement l'un par rapport à l'autre, la longueur des brins longitudinaux 74a, 74b des fils 38a, 38b reliant les brins transversaux 72a, 72b qui sont reçus dans deux encoches 54 associées consécutives, sont de longueurs différentes.

Par exemple ici, comme on peut le voir à la figure 8, le premier fil 38a est agencé transversalement à gauche du deuxième fil 38b.

Il en résulte que la longueur du brin longitudinal 74a du premier fil 38a, qui est agencé en vis-à-vis de la face latérale droite 50a du support linéaire 48 et qui relie deux brins transversaux 72a reçus dans deux encoches 54 associées consécutives, est plus faible que la longueur du brin longitudinal 74b du deuxième fil qui est lui aussi agencé en vis-à-vis de la face latérale droite 50a du support linéaire 38 et qui relie les deux brins transversaux 72b du deuxième fil 38b reçus dans ces deux mêmes encoches 54 consécutives associées.

Par contre, la longueur du brin longitudinal 74a qui est agencé en vis-à-vis de la face latérale gauche 50b du support linéaire 48 et qui relie deux brins transversaux 72a du premier fil 38a reçus dans deux encoches associées consécutives, est de longueur plus importante que le brin longitudinal 74b du deuxième fil 38b, qui relie les brins transversaux 72b du deuxième fil 38b reçus dans ces deux même encoches.

Selon un premier aspect de l'invention que l'on a représenté à la figure 4, et comme on l'a décrit précédemment, le premier fil 38a est agencé axialement au-dessus du deuxième fil 38b dans une première spire 32a, et dans une deuxième spire 32b, le premier fil 38a est agencé axialement au-dessous du deuxième fil 38b.

Pour obtenir une telle disposition des deux fils 38a, 38b l'un par rapport à l'autre, la première phase de dépose consiste à déposer les deux fils 38a, 38b sur le support linéaire 48 de manière que dans la première couche 64 de conducteurs 33, le premier fil 38a est agencé transversalement à droite du deuxième fil 38b. Par contre, la deuxième phase de dépose consiste à déposer les deux fils 38a et 38b sur le support linéaire 48 de manière que dans la deuxième couche 66 de conducteurs 33, le premier fil 38a est agencé transversalement à gauche du deuxième fil 38b.

De plus, pour que chaque enroulement de phase 30 soit du type ondulé réparti, et comme on peut le voir à la figure 7, l'étape de dépose consiste à déposer chaque conducteur 33 sur le support linéaire 48 de manière que dans la première couche 64, le conducteur 33 est déposé lors de la première phase de dépose en formant une première sinusoïde, et de manière que dans la deuxième couche, le conducteur 33 forme une deuxième sinusoïde qui est en opposition de phase par rapport à la première sinusoïde.

Ainsi, au niveau de deux encoches 54 consécutives du support linéaire 48, qui sont associées au conducteur 33, les tronçons transversaux 68 du conducteur 33 qui sont reçus dans ces deux encoches 54 et qui forment la première couche 64, sont reliés entre eux par un tronçon longitudinal 70 qui est agencé en vis-à-vis d'une première face latérale 50a, 50b du support linéaire 48, par exemple en vis-à-vis de la face latérale droite 50a, par contre, les tronçons transversaux 68 du conducteur 33 qui sont reçus dans ces deux encoches et qui forment la deuxième couche 66 de conducteurs 33 sont reliés par un tronçon longitudinal 70 qui est agencé en vis-à-vis de l'autre face latérale 50a, 50b du support linéaire 48, c'est-à-dire dans cet exemple en vis-à-vis de la face latérale gauche 50b.

Selon ce premier aspect de l'invention, les fils conducteurs 38a, 38b sont déposés dans les encoches 54 du support linéaire de manière qu'ils se croisent au niveau de l'extrémité longitudinale aval 48b du support linéaire 48.

Selon un deuxième aspect de l'invention, comme on l'a représenté à la figure 5, dans chaque spire 32 d'un enroulement 30, le premier fil 38a est agencé axialement au-dessus du deuxième fil 38b.

Par conséquent, selon cet aspect de l'invention, les deux phases de dépose des conducteurs 33 consiste à déposer les deux fils 38a, 38b sur le support linéaire 48 de manière que dans chaque couche 64, 66 du conducteur 33, le premier fil 38a est agencé transversalement à droite du deuxième fil 38b.

Conformément à un autre aspect du procédé selon l'invention, l'étape de dépose consiste, pour chaque enroulement de phase 30, à déposer sur le support linéaire 48 un même conducteur 33 lors de la première phase de dépose et lors de la deuxième phase de dépose.

Par conséquent, chaque enroulement de phase 30 est réalisé à partir d'un seul conducteur 33, et donc à partir de seulement deux fils 38a et 38b. Aussi, un premier tronçon 33a de chaque conducteur 33 forme en partie la première couche 64 du conducteur 33, et un deuxième tronçon 33b de chaque conducteur 33 forme en partie la deuxième couche 66 du conducteur 33.

De plus, la deuxième phase de dépose est mise en oeuvre continûment après la première phase de dépose de manière à n'avoir qu'un temps de pause réduit entre les deux phases de dépose.

Comme on l'a représenté à la figure 7 par la flèche F1, la première phase de dépose consiste à introduire progressivement les tronçons transversaux 68 du premier tronçon 33a de chaque conducteur 33 depuis une encoche 54 du support linéaire 48 associée qui est située au niveau d'une extrémité longitudinale amont 38a du support linéaire 48, jusqu'à une encoche 54 associée située au niveau de l'extrémité longitudinale aval 48b du support linéaire 48, c'est-à-dire de l'amont vers l'aval.

La deuxième phase de dépose, qui est mise en oeuvre continûment après la première phase de dépose consiste à introduire progressivement les tronçons transversaux 68 du deuxième tronçon 33b de chaque conducteur 33 de l'aval vers l'amont, c'est-à-dire depuis une encoche 54 associée située au niveau de l'extrémité aval 48b du support linéaire 48, jusqu'à une encoche 54 associée située au niveau de l'extrémité amont 48a du support linéaire 48, comme on l'a représenté par la flèche F2.

Postérieurement à l'étape de dépose des conducteurs 33 sur le support linéaire 48, le procédé de réalisation du stator 11 selon l'invention comporte une première étape de transfert des conducteurs 33 depuis le support linéaire 48 vers un support annulaire 78 qui consiste globalement à enrouler les deux couches 64, 66 de conducteurs 33 sur le support annulaire 78 pour former les spires 32 des enroulements de phases 30.

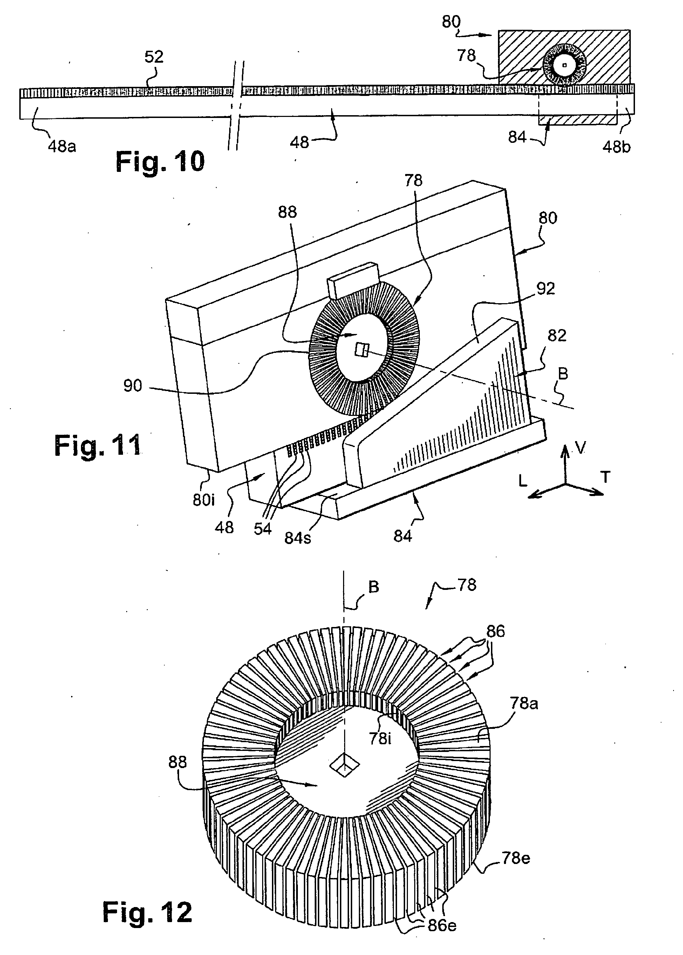

On a représenté aux figures 10 à 13, une installation pour la mise en oeuvre de la première étape de transfert, qui comporte le support annulaire 78, un carter 80 de guidage du support annulaire 78 en déplacement par rapport au support linéaire 48, deux guides longitudinaux 82 et un socle inférieur 84.

Comme on peut le voir plus en détails à la figure 12; le support annulaire 78 est un élément de révolution d'axe principal B transversal, qui est délimité radialement par une face cylindrique externe 78e et une face cylindrique interne 78i, qui est délimité axialement par deux faces radiales d'extrémité axiale 78a et qui comporte des encoches axiales 86 réalisées dans la face cylindrique externe 78e du support annulaire 78 et débouchant axialement dans les faces radiales d'extrémité axiale 78a du support annulaire 78.

La distance entre les extrémités radiales externes 86e de deux encoches 86 adjacentes du support annulaire 78 est égale à la distance entre deux encoches 54 adjacentes du support linéaire 48.

Le nombre d'encoches 86 du support annulaire 78 est égal au nombre d'encoches 20 du corps 10 de stator 11, c'est-à-dire qu'ici le support annulaire 78 comporte soixante-douze encoches 86.

Le support annulaire 78 comporte enfin un moyeu central 88 qui est fixé à la face cylindrique interne 78i du support annulaire 78 et qui permet l'entraînement en rotation du support annulaire 78 autour de son axe principal B lors de la première étape de transfert.

La longueur axiale du moyeu central 88, mesurée par rapport à l'axe principal B du support annulaire 78, est inférieure à la distance entre les deux faces radiales d'extrémité axiale 78a du support annulaire 78.

De plus, le moyeu central 88 est agencé axialement suivant l'axe B du support annulaire 78 globalement au milieu du support annulaire 78, en retrait par rapport à chacune des deux faces radiales 78a du support annulaire 78.

Par conséquent, chaque encoche 86 du support annulaire 78 débouche radialement dans la face cylindrique interne 78i du support annulaire 78, de part et d'autre du moyeu central 88.

Le carter 80 comporte un alésage 90 coaxial au support annulaire 78 et dans lequel le support annulaire 78 est reçu libre à rotation autour de son axe principal B.

Le carter 80 comporte une face horizontale inférieure 80i qui est apte à venir en appui sur la face supérieure horizontale 52 du support linéaire 48.

L'alésage 90 du carter 80 et débouchant verticalement vers le bas dans la face inférieure 80i du carter 80, pour permettre le transfert de conducteurs 33 vers le support annulaire 78.

Lors de la mise en oeuvre de la première étape de transfert, le support linéaire 48 est reçu transversalement entre les guides latéraux 82 et il est reçu verticalement entre la face inférieure 80i du carter 80 et une face supérieure horizontale 84s du socle inférieur 84.

Ainsi, le support linéaire 48 est guidé longitudinalement sans jeu au cours de la première étape de transfert.

Chaque guide latéral 82 comporte en outre une face supérieure 92 en forme de rampe, dont l'inclinaison est déterminée de manière que chaque face supérieure 92 est apte à s'appuyer dessous les brins longitudinaux 74a, 74b des fils 38a, 38b, de manière à entraîner progressivement les fils 38a, 38b vers le haut, pour leur transfert vers le support annulaire 78.

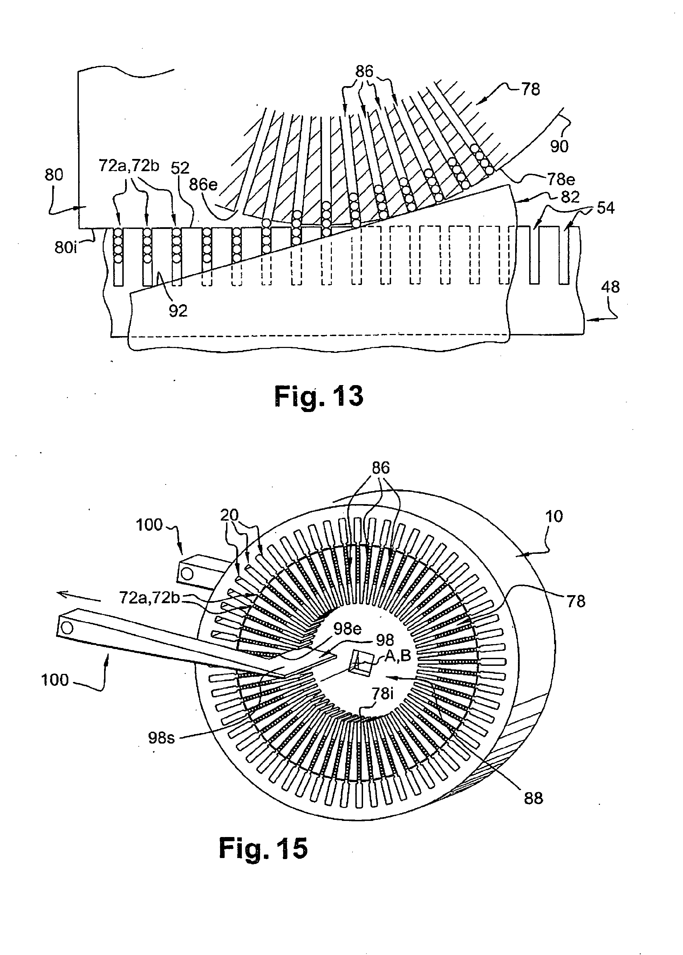

Selon le mode de réalisation représenté aux figures 11 et 13, la face supérieure 92 de chaque guide latéral 82 est plane et est inclinée par rapport à un plan horizontal.

Cependant, il sera compris que l'invention n'est pas limitée à ce mode de réalisation, et que la forme de la face supérieure 92 de chaque guide peut être différente, par exemple, la face supérieure 92 peut être convexe bombée vers le haut, concave ouverte vers le haut; ou bien elle peut former deux plans inclinés selon des angles différents.

Enfin, chaque guide latéral 82 peut aussi être réalisé en plusieurs parties, et/ou il peut être mobile verticalement de manière à pousser les brins longitudinaux 74a, 74b des fils 38a, 38b vers le haut.

L'installation de mise en oeuvre de la première étape de transfert comporte enfin des moyens d'indexation (non représentés) du support annulaire 78 par rapport au support linéaire 48 de manière qu'au cours de la première étape de transfert, chaque encoche 86 du support annulaire 78 vienne en vis-à-vis avec une encoche 54 du support linéaire 48.

La première étape de transfert consiste à faire rouler le support annulaire 78 sur la face supérieure 52 du support linéaire 48 de manière que les encoches 86 du support annulaire 78 viennent successivement en vis-à-vis avec les encoches 54 du support linéaire 48 et sans glissement du support annulaire 78 par rapport au support linéaire 48.

Pour cela, lors de la mise en oeuvre de la première étape de transfert, la face cylindrique externe 78e du support annulaire 78 est positionnée verticalement au dessus de la face supérieure 52 du support linéaire 48. La face cylindrique externe 78e du support annulaire 78 peut éventuellement être mise en contact avec la face supérieure 52 du support linéaire 48.

Lors du roulage du support annulaire 78, et comme on peut le voir à la figure 13, sur le support linéaire 48, le carter 80, les guide latéraux 82 et le socle inférieur 84 se translatent longitudinalement par rapport au support linéaire 48 en suivant le déplacement longitudinal du support annulaire 78 par rapport au support linéaire 48.

Lors de la première phase de transfert, la face supérieure 92 de chaque guide latéral 82 s'appuie vers le haut contre les brins longitudinaux 74a, 74b des fils 38a, 38b qui sont situés au niveau de l'extrémité inférieure de chaque encoche 54 du support linéaire 48.

Ainsi, les faces supérieures 92 des guides latéraux 82 permettent de transférer simultanément les tronçons transversaux 68 et les tronçons longitudinaux 70 des conducteurs formant la première couche 64 et la deuxième couche 66 de conducteurs 33.

Comme on l'a dit plus haut, le support annulaire 78 comporte un nombre d'encoches 86 qui est égal au nombre d'encoches 20 du corps 10 de stator 11 et le support linéaire 48 comporte un nombre d'encoches 54 qui est supérieur au nombre d'encoches 20 du corps 10.

Par conséquent, lors de la première étape de transfert, le support annulaire 78 effectue plusieurs tours autour de son axe principal B lors de son roulage sur la face supérieure 52 du support linéaire 48, et les deux couches 64, 66 de conducteurs 33 s'enroulent autour du support annulaire 78, en formant deux spirales coaxiales, dont chaque spire de l'une des deux spirales correspond à un tour du support annulaire 78 autour de son axe B.

Lors de la première étape de transfert, les brins transversaux 72a, 72b des deux fils 38a, 38b qui sont reçus dans chaque encoche 54 du support linéaire 48, sont tous transférés dans même une encoche 86 associée en vis-à-vis du support annulaire 78.

De plus, puisque le support annulaire 78 effectue plusieurs tours autour de son axe B lors de la première étape de transfert, chacune des encoches 86 reçoit successivement les brins transversaux 72a, 72b qui étaient reçus dans plusieurs encoches 54 du support linéaire 48 associées au même conducteur 33.

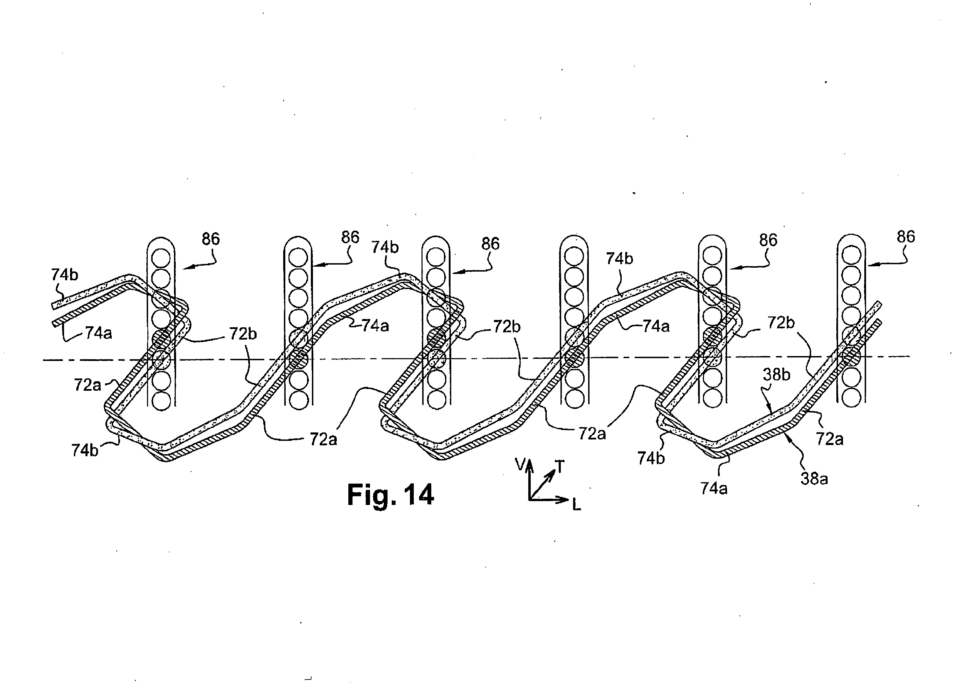

Ainsi, comme on peut le voir par exemple à la figure 14, lorsque le support annulaire 78 effectue deux tours autour de son axe B pendant la première étape de transfert, chaque encoche 86 reçoit huit brins transversaux 72a, 72b.

De plus, la largeur de chaque encoche 86 du support annulaire 78 est ici aussi globalement égale à la largeur de chacun des deux fils 38a, 38b.

Par conséquent, les brins transversaux 72a, 72b des fils 38a, 38b sont superposés radialement dans les encoches 86 du support annulaire 78 et selon la même configuration que dans les encoches 54 du support linéaire 48.

Ainsi, les brins transversaux 72a, 72b sont superposés radialement dans chaque encoche 86 du support annulaire 78 de manière alternative, et les brins longitudinaux 74a, 74b des deux fils 38a, 38b qui relient les brins transversaux 72a, 72b qui sont reçus dans deux encoches 86 consécutives associées et appartenant à une même spire 32.

Conformément à un autre aspect de l'invention, et comme on peut le voir à la figure 10, la première étape de transfert consiste à faire rouler le support annulaire 78 sur la face supérieure 52 du support linéaire 48 de l'aval vers l'amont, de manière à transférer progressivement les tronçons transversaux 68 des conducteurs 33 vers le support annulaire 78 depuis les tronçons transversaux 68 qui sont reçus dans l'encoche 54 du support linéaire 48, qui est située à l'extrémité longitudinale aval 48b du support linéaire 48, jusqu'aux tronçons transversaux 68 qui sont reçus dans l'encoche 54 du support linéaire 48, qui est située à l'extrémité longitudinale amont 48a du support linéaire 48.

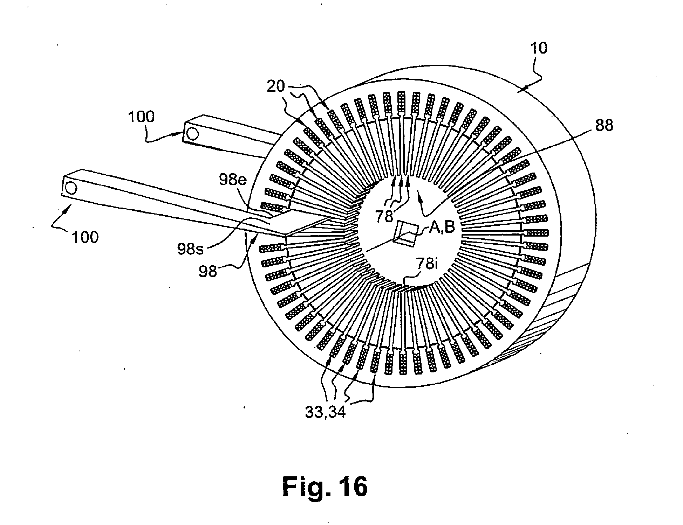

On a représenté aux figures 15 et 16, une installation pour la mise en oeuvre de la deuxième étape de transfert des conducteurs 33 depuis le support annulaire 78 vers le corps 10 du stator 11.

Cette installation comporte des moyens de positionnement du support annulaire 78 dans le corps 10, de manière que le support annulaire 78 soit reçu coaxialement au corps 10, dans le logement circulaire délimité par la face cylindrique interne 12 du corps. Enfin, le diamètre de la face cylindrique extérieure 78e du support annulaire 78 est globalement égal au diamètre de la face cylindrique interne 12 du corps 10.

L'installation comporte aussi des moyens d'indexation du support annulaire 78 autour de son axe principal B, de manière que chaque encoche 86 du support annulaire 78 soit en vis-à-vis d'une encoche 20 du corps 10 et débouche radialement dans la rainure axiale 26 de l'encoche 20 associée.

L'installation comporte enfin des lames d'insertion radiale 98 dont chacune s'étend dans un plan radial par rapport à l'axe principale B du support annulaire 78 et du corps 10.

L'installation comporte une paire de lames d'insertion 98 qui est associée à chaque encoche 86 du support annulaire 78, et les lames d'insertion 98 d'une même paire sont réparties axialement de part et d'autre du moyeu central 88 du support annulaire 78.

Ici, le support annulaire 78 comporte soixante-douze encoches 76, l'installation comporte par conséquent, soixante-douze paires de lames d'insertion 98 soit un total de cent quarante-quatre lames d'insertion 98.

Par souci de clarté, on a représenté aux figures 15 et 16 une seule paire de lames d'insertion 98.

Les paires de lames 98 étant identiques et réparties angulairement autour de l'axe principal B du support annulaire 78, la description des lames 98 qui va suivre s'applique à l'identique aux autres lames d'insertion 98.

Les deux lames d'insertion 98 d'une même paire sont associées à une seule encoche 86 du support annulaire 78.

Elles s'étendent dans le plan radial médian de l'encoche 86 associée, et l'épaisseur de chaque lame 98 est inférieure à la plus petite largueur de l'encoche 86 associée.

Comme on l'a dit plus haut, les deux lames 98 d'une même paire sont agencées axialement de part et d'autre du moyeu central 88 du support annulaire 78.

Plus précisément, comme on peut le voir à la figure 15, au début de la deuxième étape de transfert, chaque lame 98 est située radialement de manière que le bord d'extrémité radiale externe 98e de chaque lame 98 soit situé radialement au niveau de la face cylindrique interne 78i du support annulaire 78.

L'extrémité axiale externe 98s de chaque lame 98, c'est-à-dire celle qui est située axialement à distance du moyeu central 88, fait saillie axialement par rapport à la face radiale 78a associée du support annulaire 78, et elle porte une tige 100 d'entraînement de la lame 98, qui s'étend radialement vers l'extérieur par rapport à l'axe principal B du support annulaire 78.

Lors de la mise en oeuvre de la deuxième étape de transfert, les lames d'insertion 98 d'une même paire sont entraînées radialement par rapport à l'axe principal B du support annulaire 78, de manière que chaque lame 98 se déplace radialement dans l'encoche 86 associée du support annulaire vers l'extérieur du support annulaire 78, en entraînant simultanément les brins transversaux 72a, 72b qui sont reçus dans cette encoche 86, de manière que ces brins transversaux 78a, 72b migrent dans l'encoche 20 associée du corps 10, formant alors les brins 42a, 42b des enroulements de phase 30.

A l'issue de la phase d'entraînement, et comme on peut le voir plus en détails à la figure 16, chaque lame 98 est située radialement par rapport à l'axe principal B du support annulaire 78 de manière que son bord d'extrémité radiale externe 98e est situé globalement au niveau de la face cylindrique externe 78e du support annulaire 78.

De plus, tous les brins transversaux 72a, 72b qui étaient reçus dans chaque encoche 86 du support annulaire 78 ont migrés dans une encoche associée du corps 10.

Selon un mode de réalisation préféré de cette deuxième étape de transfert, toutes les lames d'insertion 98 sont entraînées simultanément en déplacement radial vers l'extérieur dans les encoches 86 associée du support annulaire 78.

Ainsi, le transfert de tous les brins transversaux 72a, 72b est réalisé de manière simultanée.

Comme on l'a dit plus haut, la largueur de chaque encoche 20 du corps 10 est globalement égale au double de la largueur de chaque fil 38a, 38b, et pour chaque spire 32 d'un enroulement de phase 30, les deux fils 38a, 38b sont agencés globalement à la même cote radiale l'un par rapport à l'autre.

Lors de leur transfert de puis une encoche 86 du support annulaire 78, dans laquelle ils sont alignés radialement, vers l'encoche 20 associée du corps 10 du stator 11, dans laquelle ils sont agencés à la même cote radiale, les brins 72a, 72b se répartissent tangentiellement par rapport à l'axe principal A du corps 10 du fait de l'élasticité propre des fils 38a, 38b.

En effet, comme on l'a dit plus haut, les brins longitudinaux 74a, 74b des fils 38a, 38b sont de longueur différentes, ainsi, les deux brins transversaux 72a, 72b d'un fil 38a, 38b qui sont reçus dans deux encoches 86 du support annulaire 78 et qui sont reliés entre eux par un brin longitudinal 74a, 74b de longueur la plus faible ont naturellement tendance à se rapprocher l'un de l'autre dans les encoches 20 associés du corps 10, par rapport au deux brins transversaux 72a, 72b qui sont reçus dans les deux mêmes encoches 86 du support annulaire 78 et qui sont reliés par un brin longitudinal de longueur la plus grande qui ont alors naturellement tendance à s'écarter l'un de l'autre.

## Revendications

1. Stator (11) de machine électrique tournante qui comporte :
- un corps (10) annulaire d'axe principal globalement vertical qui est délimité axialement par une face supérieure (18) et par une face inférieure (16), et qui est délimité radialement par une face annulaire interne (12) ;
- un ensemble d'encoches axiales (20) réalisées dans la face annulaire interne (12) du corps (10) et qui sont débouchantes dans la face supérieure (18) et dans la face inférieure (16) du corps (10) ; et
- un bobinage comportant une pluralité d'enroulements (30),
du type dans lequel chaque enroulement (30) est constitué d'au moins un conducteur (33) qui est agencé dans des encoches du corps (10) associées à l'enroulement (30), en formant des ondulations axiales et en formant globalement une spirale coaxiale à l'axe A du corps (10) qui est constituée d'un ensemble de spires (32a, 32b) superposées radialement,
**caractérisé en ce que** chaque conducteur (33) comporte une paire de fils (38a, 38b) conducteurs électriquement qui sont adjacents et qui sont agencés à la même cote radiale l'un par rapport à l'autre, à chaque point du conducteur (33).

2. Stator (11) selon la revendication précédente, **caractérisé en ce que** pour chaque spire (32a, 32b), les deux fils (38a, 38b) forment des ondulations axiales complémentaires qui sont imbriquées axialement, de manière que l'un des deux fils (38a, 38b) soit situé axialement dessus l'autre.

3. Stator (11) selon l'une quelconque des revendications précédentes, **caractérisé en ce que** chaque fil (38a, 38b) du conducteur (33) comporte consécutivement, d'amont en aval :
- un brin inférieur (40a, 40b) qui est agencé globalement au dessous de la face inférieure (16) du corps (10) ;
- un brin axial amont (42a, 42b) qui est agencé dans une première encoche (20) associée à l'enroulement (30) ;
- un brin supérieur (44a, 44b) qui est agencé globalement au dessus de la face supérieure du corps (10) ; et
- un brin axial aval (42a, 42b) qui est agencé dans une deuxième encoche (20) associée à l'enroulement (30), la dite deuxième encoche (20) étant située en aval par rapport à dite la première encoche (20).

4. Stator (11) selon la revendication précédente, **caractérisé en ce que** dans au moins une spire (32) du bobinage, le brin inférieur (40a) d'un premier fil (38a) est agencé axialement au-dessus d'un brin inférieur (40b) d'un deuxième fil (38b), le premier brin axial (42a) du premier fil (38a) est situé en amont du premier brin axial (42b) du deuxième fil (38b), le brin supérieur (44a) du premier fil (38a) est agencé axialement dessus le brin supérieur (44b) du deuxième fil (38b) et le deuxième brin axial (42a) du premier fil (38a) est situé en aval du deuxième brin axial (42b) du deuxième fil (38b).

5. Stator (11) selon la revendication précédente, **caractérisé en ce que** dans au moins une autre spire (32) du bobinage, le brin inférieur (40a) du premier fil (38a) est agencé axialement au-dessous d'un brin inférieur (40b) du deuxième fil (38b), le premier brin axial (42a) du premier fil (38a) est situé en amont du premier brin axial (42a) du deuxième fil (38b), le brin supérieur (44a) du premier fil (38a) est agencé axialement dessous le brin supérieur (44b) du deuxième fil (38b) et le deuxième brin axial (42a) du premier fil (38a) est situé en aval du deuxième brin axial (42b) du deuxième fil (38b).

6. Stator (11) selon l'une quelconque des revendications 3 à 5, **caractérisé en ce que** tous les brins axiaux (42a, 42b) de chaque fil (38a, 38b), qui sont agencés dans une même encoche (20), sont situés à la même cote angulaire autour de l'axe A du stator (11).

7. Procédé de bobinage d'un stator (11) selon l'une quelconque des revendications précédentes, qui comporte successivement, pour chaque enroulement (30) :
- une étape de bobinage du conducteur (33) sur un support linéaire (48) en forme de rail longitudinal comportant des encoches (54) transversales ;
- une première étape de transfert du conducteur (33) depuis le support linéaire (48) dans un support annulaire (78) ; et
- une deuxième étape de transfert du conducteur (33) depuis le support annulaire (78) dans le corps (10),
du type dans lequel l'étape de bobinage consiste à mettre en place le conducteur (33) dans des encoches (54) associées à l'enroulement (30) de manière que chaque fil (38a, 38b) comporte un brin axial (72a, 72b) qui est reçu dans chaque encoche (54) transversale associée, et de manière que chaque fil (38a, 38b) comporte des brins longitudinaux (74a, 74b) qui sont agencés transversalement de part et d'autre du support linéaire (48),
**caractérisé en ce que** lors de l'étape de bobinage, les deux fils (38a, 38b) du conducteur (33) sont mis en place simultanément sur le support linéaire (48) et les encoches (54) associées reçoivent successivement les deux fils (38a, 38b) de manière que dans chaque encoche (54), les deux fils (38a, 38b) sont superposés verticalement l'un sur l'autre, et de manière que dans une première encoche (54), le brin axial (72a) du premier fil (38a) est agencé dessus le brin axial (72b) du deuxième fil (38b), et dans une deuxième encoche (54) qui est consécutive à la première encoche (54), le brin axial (72a) du premier fil (38a) est agencé dessous le brin axial (72b) du deuxième fil (38b).

8. Procédé selon la revendication précédente, **caractérisé en ce que** lors de l'étape de bobinage, les deux fils (38a, 38b) du conducteur (33) sont mis en place sur le support linéaire de manière que la longueur des brins longitudinaux (74a) du premier fil (38a), qui sont agencé à droite du support linéaire (48) est inférieure à la longueur des brins longitudinaux (74b) du deuxième fil (38b) qui sont agencés à droite du support linéaire (48).

9. Procédé selon la revendication précédente, **caractérisé en ce que** lors de l'étape de bobinage, les deux fils (38a, 38b) du conducteur (33) sont mis en place sur le support linéaire (48) de manière que la longueur des brins longitudinaux (74a) du premier fil (38a), qui sont agencé à gauche du support linéaire (48) est supérieure à la longueur des brins longitudinaux (74b) du deuxième fil (38b) qui sont agencés à gauche du support linéaire (48).

10. Procédé selon l'une quelconque des revendications 8 ou 9, **caractérisé en ce que** lors de l'étape de bobinage, les deux fils (38a, 38b) du conducteur (33) sont mis en place sur le support linéaire (48) de manière que chaque brin longitudinal (74a) du premier fil (38a), qui est agencé à droite du support linéaire (48) est agencé transversalement entre le support linéaire (48) et le brin longitudinal (74b) associé du deuxième fil (38b).

11. Procédé selon l'une quelconque des revendications 8 à 10, **caractérisé en ce que** lors de l'étape de bobinage, les deux fils (38a, 38b) du conducteur (33) sont mis en place sur le support linéaire (48) de manière que chaque brin longitudinal (74b) du deuxième fil (38b), qui est agencé à gauche du support linéaire (48) est agencé transversalement entre le support linéaire (48) et le brin longitudinal (74a) associé du premier fil (38a).

12. Procédé selon l'une quelconque des revendications 7 à 11, **caractérisé en ce que** la première étape de transfert consiste à transférer successivement les brins (72a, 72b) qui sont agencés dans chaque encoche (54) du support linéaire (48), vers une encoche radiale associée (86) du support annulaire (78) de manière que dans chaque encoche radiale (86) les brins (72a, 72b) soient superposés radialement.

13. Procédé selon l'une quelconque des revendications 7 à 12, **caractérisé en ce que** la deuxième étape de transfert consiste à transférer simultanément les brins (72a, 72b) agencés dans chaque encoche radiale (86) du support annulaire (78) dans une encoche (20) en vis-à-vis du corps (10).

14. Procédé selon la revendication précédente, **caractérisé en ce que** lors de la deuxième étape de transfert, tous les brins (72a, 72b) qui sont agencés à la même cote radiale dans les encoches radiales (86) du support annulaire (78) se décalent angulairement dans l'encoche (86) associée vers l'amont ou vers l'aval.

## Claims

1. Rotating electrical machine stator (11) which comprises:
- an annular body (10) having a generally vertical principal axis, which is bounded axially by an upper face (18) and by a lower face (16) and is bound radially by an internal annular face (12);
- an array of axial notches (20) that are produced in the internal annular face (12) of the body (10) and that open onto both the upper face (18) and the lower face (16) of the body (10); and
- a coil comprising a plurality of windings (30), of the type in which each winding (30) consists of at least one conductor (33) which is placed in notches of the body (10) that are associated with the winding (30), forming axial corrugations and forming overall a spiral coaxial with the axis A of the body (10), said spiral consisting of a set of radially superposed turns (32a, 32b),
**characterized in that** each conductor (33) comprises a pair of electrically conducting wires (38a, 38b) that are adjacent and arranged on the same radial side one with respect to the other at each point of the conductor (33).

2. Stator (11) according to the preceding claim, **characterized in that**, for each turn (32a, 32b), the two wires (38a, 38b) form complementary axial corrugations that are axially imbricated so that one of the two wires (38a, 38b) lies axially above the other.

3. Stator (11) according to any one of the preceding claims, **characterized in that** each wire (38a, 38b) of the conductor (33) comprises in succession, in the upstream-to-downstream direction:
- a lower strand (40a, 40b) which is placed generally beneath the lower face (16) of the body (10);
- an upstream axial strand (42a, 42b) which is placed in a first notch (20) associated with the winding (30);
- an upper strand (44a, 44b) which is generally placed above the upper face of the body (10); and
- a downstream axial strand (42a, 42b) which is placed in a second notch (20) associated with the winding (30), said second notch (20) being located downstream of said first notch (20).

4. Stator (11) according to the preceding claim, **characterized in that**, at least in one turn (32) of the coil, the lower strand (40a) of a first wire (38a) is placed axially above a lower strand (40b) of a second wire (38b), the first axial strand (42a) of the first wire (38a) is located upstream of the first axial strand (42b) of the second wire (38b), the upper strand (44a) of the first wire (38a) is placed axially above the upper strand (44b) of the second wire (38b) and the second axial strand (42a) of the first wire (38a) is located downstream of the second axial strand (42b) of the second wire (38b).

5. Stator (11) according to the preceding claim, **characterized in that**, at least in another turn (32) of the coil, the lower strand (40a) of the first wire (38a) is placed axially beneath a lower strand (40b) of the second wire (38b), the first axial strand (42a) of the first wire (38a) is located upstream of the first axial strand (42a) of the second wire (38b), the upper strand (44a) of the first wire (38a) is placed axially beneath the upper strand (44b) of the second wire (38b) and the second axial strand (42a) of the first wire (38a) is located downstream of the second axial strand (42b) of the second wire (38b).

6. Stator (11) according to any one of Claims 3 to 5, **characterized in that** all the axial strands (42a, 42b) of each wire (38a, 38b), which are placed in any one notch (20), lie at the same angle to the axis A of the stator (11).

7. Method of winding a stator (11) according to any one of the preceding claims, which comprises in succession, for each winding (30):
- a step of winding the conductor (33) onto a linear support (48) in the form of a longitudinal rail having transverse notches (54);
- a first step of transferring the conductor (33) from the linear support (48) to an annular support (78); and
- a second step of transferring the conductor (33) from the annular support (78) to the body (10),
of the type in which the winding step consists in putting the conductor in place (33) in notches (54) associated with the winding (30) so that each wire (38a, 38b) comprises an axial strand (72a, 72b) which is housed in each associated transverse notch (54) and so that each wire (38a, 38b) comprises longitudinal strands (74a, 74b) which are placed transversely on either side of the linear support (48),
**characterized in that**, during the winding step, the two wires (38a, 38b) of the conductor (33) are put in place simultaneously on the linear support (48) and the associated notches (54) receive in succession the two wires (38a, 38b) so that, in each notch (54), the two wires (38a, 38b) are vertically superposed one with respect to the other and so that, in a first notch (54), the axial strand (72a) of the first wire (38a) is placed above the axial strand (72b) of the second wire (38b) and, in a second notch (54) which comes after the first notch (54), the axial strand (72a) of the first wire (38a) is placed beneath the axial strand (72b) of the second wire (38b).

8. Method according to the preceding claim, **characterized in that**, during the winding step, the two wires (38a, 38b) of the conductor (33) are put in place on the linear support so that the length of the longitudinal strands (74a) of the first wire (38a), which are placed on the right side of the linear support (48), is shorter than the length of the longitudinal strands (74b) of the second wire (38b) that are based on the right side of the linear support (48) .

9. Method according to the preceding claim, **characterized in that**, during the winding step, the two wires (38a, 38b) of the conductor (33) are put in place on the linear support (48) so that the length of the longitudinal strands (74a) of the first wire (38a), which are placed on the left side of the linear support (48), is longer than the length of the longitudinal strands (74b) of the second wire (38b) that are based on the left side of the linear support (48).

10. Method according to either of Claims 8 and 9, **characterized in that**, during the winding step, the two wires (38a, 38b) of the conductor (33) are put in place on the linear support (48) so that each longitudinal strand (74a) of the first wire (38a), which is placed on the right side of the linear support (48), is placed transversely between the linear support (48) and the longitudinal strand (74b) associated with the second wire (38b).

11. Method according to any one of Claims 8 to 10, **characterized in that**, during the winding step, the two wires (38a, 38b) of the conductor (33) are put in place on the linear support (48) so that each longitudinal strand (74b) of the second wire (38b), which is placed on the left side of the linear support (48), is placed transversely between the linear support (48) and the longitudinal strand (74a) associated with the first wire (38a).

12. Method according to any one of Claims 7 to 11, **characterized in that** the first transverse step consists in transferring in succession the strands (72a, 72b) that are placed in each notch (54) of the linear support (48) to an associated radial notch (86) of the annular support (78) so that, in each radial notch (86), the strands (72a, 72b) are radially superposed.

13. Method according to any one of Claims 7 to 12, **characterized in that** the second transverse step consists in simultaneously transferring the strands (72a, 72b) placed in each radial notch (86) of the annular support (78) to a facing notch (20) of the body (10) .

14. Method according to the preceding claim, **characterized in that**, during the second transfer step, all the strands (72a, 72b) which are placed with the same radial dimension in the radial notches (86) of the annular support (78) are angularly offset in the associated notch (86) towards the downstream end or towards the upstream end.

## Patentansprüche

1. Stator (11) für eine drehende elektrische Maschine, umfassend:
- einen ringförmigen Körper (10) mit einer allgemein vertikalen Hauptachse, der axial durch eine Oberseite (18) und durch eine Unterseite (16) begrenzt wird und der radial durch eine ringförmige Innenseite (12) begrenzt wird;
- eine Anordnung von axialen Kerben (20), die in der ringförmigen Innenseite (12) des Körpers (10) ausgebildet sind und die in der Oberseite (18) und in der Unterseite (16) des Körpers (10) münden; und
- eine Spule, die mehrere Wicklungen (30) aufweist,
jener Art, bei der jede Wicklung (30) aus mindestens einem Leiter (33) besteht, der in den der Wicklung (30) zugeordneten Kerben des Körpers (10) angeordnet ist, indem axiale Wellungen gebildet werden und indem allgemein eine zu der Achse A des Körpers (10) koaxiale Spirale gebildet wird, die aus einer Anordnung von radial übereinander gelagerten Windungen (32a, 32b) besteht,
**dadurch gekennzeichnet, dass** jeder Leiter (33) ein Paar elektrisch leitender Drähte (38a, 38b) umfasst, die benachbart sind und die bezüglich einander im gleichen Radialmaß an jedem Punkt des Leiters (33) angeordnet sind.

2. Stator (11) nach dem vorhergehenden Anspruch, **dadurch gekennzeichnet, dass** für jede Windung (32a, 32b) die beiden Drähte (38a, 38b) axiale komplementäre Windungen bilden, die sich axial überlappen, so dass einer der beiden Drähte (38a, 38b) axial über dem anderen positioniert ist.

3. Stator (11) nach einem der vorhergehenden Ansprüche, **dadurch gekennzeichnet, dass** jeder Draht (38a, 38b) des Leiters (33) von stromaufwärts nach stromabwärts aufeinander folgend Folgendes umfasst:
- eine untere Ader (40a, 40b), die allgemein unterhalb der Unterseite (16) des Körpers (10) angeordnet ist;
- eine stromaufwärtige axiale Ader (42a, 42b), die in einer der Wicklung (30) zugeordneten ersten Kerbe (20) angeordnet ist;
- eine obere Ader (44a, 44b), die allgemein oberhalb der Oberseite des Körpers (10) angeordnet ist; und
- eine stromabwärtige axiale Ader (42a, 42b), die in einer der Wicklung (30) zugeordneten zweiten Kerbe (20) angeordnet ist, wobei die zweite Kerbe (20) stromabwärts der ersten Kerbe (20) positioniert ist.

4. Stator (11) nach dem vorhergehenden Anspruch, **dadurch gekennzeichnet, dass** bei mindestens einer Windung (32) der Spule die untere Ader (40a) eines ersten Drahtes (38a) axial über einer unteren Ader (40b) des zweiten Drahtes (38b) angeordnet ist, die erste axiale Ader (42a) des ersten Drahtes (38a) stromaufwärts der ersten axialen Ader (42b) des zweiten Drahtes (38b) positioniert ist, die obere Ader (44a) des ersten Drahtes (38a) axial über der oberen Ader (44b) des zweiten Drahtes (38b) angeordnet ist und die zweite axiale Ader (42a) des ersten Drahtes (38a) stromabwärts der zweiten axialen Ader (42b) des zweiten Drahtes (38b) positioniert ist.

5. Stator (11) nach dem vorhergehenden Anspruch, **dadurch gekennzeichnet, dass** bei mindestens einer anderen Windung (32) der Spule die untere Ader (40a) des ersten Drahtes (38a) axial unter einer unteren Ader (40b) des zweiten Drahtes (38b) angeordnet ist, die erste axiale Ader (42a) des ersten Drahtes (38a) stromaufwärts der ersten axialen Ader (42a) des zweiten Drahtes (38b) positioniert ist, die obere Ader (44a) des ersten Drahtes (38a) axial unter der oberen Ader (44b) des zweiten Drahtes (38b) angeordnet ist und die zweite axiale Ader (42a) des ersten Drahtes (38a) stromabwärts der zweiten axialen Ader (42b) des zweiten Drahtes (38b) positioniert ist.

6. Stator (11) nach einem der Ansprüche 3 bis 5, **dadurch gekennzeichnet, dass** alle axialen Adern (42a, 42b) jedes Drahtes (38a, 38b), die in einer gleichen Kerbe (20) angeordnet sind, im gleichen Winkelmaß um die Achse A des Stators (11) herum positioniert sind.

7. Verfahren zum Wickeln eines Stators (11) nach einem der vorhergehenden Ansprüche, das aufeinander folgend für jede Wicklung (30) Folgendes umfasst:
- einen Schritt des Wickelns des Leiters (33) auf einen linearen Träger (48) in Form einer Längsschiene, die Querkerben (54) aufweist;
- eine ersten Schritt des Übertragens des Leiters (33) von dem linearen Träger (48) in einen ringförmigen Träger (78); und
- einen zweiten Schritt des Übertragens des Leiters (33) von dem ringförmigen Träger (78) in den Körper (10),
jener Art, bei der der Schritt des Wickelns darin besteht, den Leiter (33) in die der Wicklung (30) zugeordneten Kerben (54) zu positionieren, derart, dass jeder Draht (38a, 38b) eine axiale Ader (72a, 72b) aufweist, die in jeder zugeordneten Querkerbe (54) aufgenommen wird, und dass jeder Draht (38a, 38b) Längsadern (74a, 74b) aufweist, die auf beiden Seiten des linearen Trägers (48) quer angeordnet sind,
**dadurch gekennzeichnet, dass** bei dem Schritt des Wickelns die beiden Drähte (38a, 38b) des Leiters (33) gleichzeitig auf dem linearen Träger (48) platziert werden und die zugeordneten Kerben (54) aufeinander folgend die beiden Drähte (38a, 38b) aufnehmen, derart, dass in jeder Kerbe (54) die beiden Drähte (38a, 38b) vertikal übereinander gelagert sind, und dass in einer ersten Kerbe (54) die axiale Ader (72a) des ersten Drahtes (38a) über der axialen Ader (72b) des zweiten Drahtes (38b) angeordnet ist und in einer zweiten Kerbe (54), die der ersten Kerbe (54) folgt, die axiale Ader (72a) des ersten Drahtes (38a) unter der axialen Ader (72b) des zweiten Drahtes (38b) angeordnet ist.

8. Verfahren nach dem vorhergehenden Anspruch, **dadurch gekennzeichnet, dass** bei dem Schritt des Wickelns die beiden Drähte (38a, 38b) des Leiters (33) so auf dem linearen Träger platziert werden, dass die Länge der Längsadern (74a) des ersten Drahtes (38a), die rechts des linearen Trägers (48) angeordnet sind, kleiner ist als die Länge der Längsadern (74b) des zweiten Drahtes (38b), die rechts des Längsträgers (48) angeordnet sind.

9. Verfahren nach dem vorhergehenden Anspruch, **dadurch gekennzeichnet, dass** bei dem Schritt des Wickelns die beiden Drähte (38a, 38b) des Leiters (33) so auf dem linearen Träger (48) platziert werden, dass die Länge der Längsadern (74a) des ersten Drahtes (38a), die links des linearen Trägers (48) angeordnet sind, größer ist als die Länge der Längsadern (74b) des zweiten Drahtes (38b), die links des linearen Trägers (48) angeordnet sind.

10. Verfahren nach Anspruch 8 oder 9, **dadurch gekennzeichnet, dass** bei dem Schritt des Wickelns die beiden Drähte (38a, 38b) des Leiters (33) so auf dem linearen Träger (48) platziert werden, dass jede Längsader (74a) des ersten Drahtes (38a), die rechts vom linearen Träger (48) angeordnet ist, quer zwischen dem linearen Träger (48) und der dem zweiten Draht (38b) zugeordneten Längsader (74b) angeordnet ist.

11. Verfahren nach einem der Ansprüche 8 bis 9, **dadurch gekennzeichnet, dass** bei dem Schritt des Wickelns die beiden Drähte (38a, 38b) des Leiters (33) so auf dem linearen Träger (48) platziert werden, dass jede Längsader (74b) des zweiten Drahtes (38b), die links des linearen Trägers (48) angeordnet ist, quer zwischen dem linearen Träger (48) und der dem ersten Draht (38a) zugeordneten Längsader (74a) angeordnet ist.

12. Verfahren nach einem der Ansprüche 7 bis 11, **dadurch gekennzeichnet, dass** der erste Schritt des Übertragens darin besteht, die Adern (72a, 72b), die in jeder Kerbe (54) des linearen Trägers (48) angeordnet sind, aufeinander folgend zu einer zugeordneten radialen Kerbe (86) des ringförmigen Trägers (78) zu übertragen, so dass die Adern (72a, 72b) in jeder radialen Kerbe (86) radial übereinander gelagert sind.

13. Verfahren nach einem der Ansprüche 7 bis 12, **dadurch gekennzeichnet, dass** der zweite Schritt des Übertragens darin besteht, die Adern (72a, 72b), die in jeder radialen Kerbe (86) des ringförmigen Trägers (78) angeordnet sind, in eine Kerbe (20) gegenüber dem Körper (10) zu übertragen.

14. Verfahren nach dem vorhergehenden Anspruch, **dadurch gekennzeichnet, dass** beim zweiten Schritt des Übertragens alle Adern (72a, 72b), die im gleichen Radialmaß in den radialen Kerben (86) des ringförmigen Trägers (78) angeordnet sind, in der zugeordneten Kerbe (86) winkelförmig nach stromaufwärts oder nach stromabwärts versetzt sind.
